# EUROPÄISCHE PATENTSCHRIFT

(11) **EP 0 817 917 B1**
(45) Veröffentlichungstag und Bekanntmachung des Hinweises auf die Patenterteilung: **17.07.2002**
(21) Anmeldenummer: 96904057.5
(22) Anmeldetag: 10.02.1996
(51) Int. Cl.: F04D 27/00, F04D 27/02, G01H 1/00, F04D 29/04

(54) **UMWÄLZGEBLÄSE, VAKUUMPUMPE ODER DERGLEICHEN**
CIRCULATING BLOWER, VACUUM PUMP OR THE LIKE
VENTILATEUR DE CIRCULATION, POMPE A VIDE OU ANALOGUE

(30) Priorität: 29.03.1995 DE 19511430
(43) Veröffentlichungstag der Anmeldung: 14.01.1998
(73) Patentinhaber: LEYBOLD AKTIENGESELLSCHAFT, 50968 Köln (DE)
(72) Erfinder: BAHNEN, Rudolf, D-52159 Roetgen (DE); THIEL, Matthias, D-50354 Hürth (DE); THÖREN, Heinz, D-41470 Neu (DE); RONTHALER, Karl-Heinz, D-53909 Zülpich (DE); CLARENBACH, Volker, D-52074 Aachen (DE); MEUTER, Herbert, D-52135 Herzogenrath (DE)
(74) Vertreter: Leineweber, Jürgen, Dipl.-Phys.
(86) Internationale Anmeldenummer: EP9600571
(87) Internationale Veröffentlichungsnummer: WO9630649

(56) Entgegenhaltungen:
- EP-A- 0 085 570
- GB-A- 2 188 422
- US-A- 4 237 454
- JOURNAL OF VACCUUM SCIENCE & TECHNOLOGY, Bd. 7, Mai 1989, NEW YORK, US, Seiten 2377-2380, XP000068726 F. CASARO: "Vibrations in Turbomolecular pumps: Spectra and source location"
- JOURNAL OF VACCUUM SCIENCE & TECHNOLOGY, Bd. 8, Nr. 3, Mai 1990, NEW YORK, Seiten 2772-2777, XP000147960 M. HELDNER: "Reliability of turbomolecular vacuum pumps: A comparison of rolling elements and magnetic bearing systems"

## Beschreibung

Die Erfindung bezieht sich auf ein Umwälzgebläse, eine Vakuumpumpe oder eine ähnliche Maschine mit den Merkmalen des Oberbegriffs des Patentanspruchs 1 sowie ein Verfahren zum Betrieb einer solchen Maschine.

Zum Stand der Technik gehört der Inhalt der folgenden Druckschriften
- Journal of Vacuum Science & Technology, Bd. 7, Mai 1989, New York, US, Seiten 2377-2380, XP000068726, F. Casaro: "Vibrations in Turbomolecular pumps: Spectra and source locations" (D 1)
- US-A-42 37 454 (D 2)
- GB-A-21 88 422 (D 3).

Eine Maschine mit den Merkmalen des Oberbegriffs des Patentanspruchs 1 ist aus D 2 bekannt. D 1 beschreibt die bei Turbomolekularpumpen auftretenden Vibrationen. Aus D 3 ist es bekannt, dass Lagergeräusche eine Frequenz kleiner 100 kHz haben können.

Maschinen der erwähnten Art werden häufig bei Anlagen eingesetzt, die lange Betriebszeiten haben. Die Betriebszeit von Gaslasern, in welchen zur Umwälzung des Lasergases Gebläse benötigt werden, betragen beispielsweise 10 bis 20.000 Stunden.

Anlagen für die Erzeugung von Halbleiterbauteilen benötigen Vakuumpumpen. Sie werden häufig mehrere Monate ohne Unterbrechung betrieben.

Die Lebensdauer eines Gebläses oder einer Vakuumpumpe hängt maßgeblich von der Lebensdauer der eingebauten Lager ab. Ein Lagerausfall führt jedoch nicht nur zu einer Betriebsunterbrechung; er kann sogar - insbesondere bei mit hohen Drehzahlen betriebenen Gebläsen und Turbomolekularvakuumpumpen - einen Totalschaden der Pumpe zur Folge haben. Um diese nachteiligen Folgen eines Lagerausfalles zu vermeiden, ist man bisher den Weg der vorbeugenden Instandhaltung gegangen, d.h., daß die Lager relativ häufig ausgewechselt wurden. Vorbeugende Instandhaltungsarbeiten dieser Art sind aufwendig und kostspielig. Außerdem sind sie ebenfalls mit Betriebsunterbrechungen verbunden.

Der vorliegenden Erfindung liegt die Aufgabe zugrunde, bei Vakuumpumpen der eingangs erwähnten Art auf die relativ häufigen vorbeugenden Instandhaltungsarbeiten verzichten zu können.

Erfindungsgemäß wird diese Aufgabe durch die kennzeichnenden Merkmale der Patentansprüche gelöst.

Dadurch, dass der Sensor und die elektronische Einheit im Frequenzbereich von etwa 0,1 bis 100 kHz breitbandig ausgelegt sind, können zum einen aufwendige elektronische Filtersysteme entfallen; zum anderen können störende Vibrationen mit von den Lagerfrequenzen verschiedenen Frequenzen erfaßt werden. Solche Vibrationen treten beispielsweise infolge von Unwuchten des Rotors auf. Die Gefahr der Zunahme von Rotor-Unwuchten besteht insbesondere bei Vakuumpumpen, die in Halbleiter-Beschichtungs-Anlagen eingesetzt werden. Bei diesen Anlagen gelangen staubförmige Verunreinigungen in die Vakuumpumpe, welche häufig sogar erst bei ansteigendem Druck, also im Schöpfraum der Vakuumpumpe entstehen. Diese lagern sich auf der Oberfläche des Rotors an und führen nach und nach zu Unwuchten.

Ein Körperschallsensor ist in der Lage, die während des Betriebs der Vakuumpumpe auftretenden Vibrationen bzw. Körperschallsignale zu erfassen, auszuwerten und beim Überschreiten eines vorgegebenen Grenzwertes Schaltvorgänge, z.B. das Abschalten der Pumpe, auszulösen. Lagerschäden kündigen sich in aller Regel durch eine Zunahme der ohnehin infolge der Rotordrehung vorhandenen Vibrationen an. Mit Hilfe des Körperschallsensors können die Pumpe nach einem Überschreiten eines vorgegebenen Grenzwertes abgeschaltet und die Lager ausgewechselt werden, bevor es zu einem Totalschaden in der Pumpe kommt. Häufige vorbeugende Instandhaltungsarbeiten sind nicht mehr erforderlich.

Als geeignete Sensoren haben sich handelsübliche Körperschallsensoren erwiesen, wie sie beispielsweise aus der Automobilindustrie zur Überwachung des Klopfens von Motoren bekannt sind. Sensoren dieser Art werden in Großserien hergestellt und sind deshalb preiswert. Sie besitzen eine Piezokeramik, bei der Schwingungen Ladungsverschiebungen bewirken. Diese können mit Hilfe einer elektronischen Einheit erfaßt und ausgewertet werden.

Der Einsatz von Körperschallsensoren hat sich als besonders vorteilhaft bei Vakuumpumpen mit Keramiklagern oder Hybridlagern erwiesen. Bei Lagern dieser Art bestehen zumindest die Wälzkörpern aus Keramik. Versuche haben ergeben, daß Keramiklager einen Schaden, der zu einem Lagerausfall führt, bereits sehr früh (viele Stunden vor dem eigentlichen Lagerausfall) durch verstärkte Vibrationen anzeigen. Es ist deshalb nicht erforderlich, sofort nach den ersten vom Körperschallsensor gelieferten Signalen mit Notabschaltungen und/oder Betriebsunterbrechungen zu reagieren. Herstellungs- oder Fertigungsprozesse können in aller Regel noch zu Ende geführt werden. Erst danach müssen die Pumpe abgeschaltet und die Lager ausgetauscht werden.

Weitere Vorteile und Einzelheiten der Erfindung sollen anhand von in den Figuren 1 bis 3 dargestellten Ausführungsbeispielen erläutert werden. Es zeigen
- Figur 1 ein Turboradialgebläse mit einem Sensor nach der Erfindung,
- Figur 2 einen auf das Gehäuse der Pumpe befestigten Körperschallsensor, der über eine Kabelverbindung mit einer elektronischen Einheit in Verbindung steht und
- Figur 3 einen gemeinsam mit der elektronischen Einheit in einem Gehäuse untergebrachten Körperschallsensor, der zusammen mit dem Elektronikgehäuse am Pumpengehäuse befestigt ist.

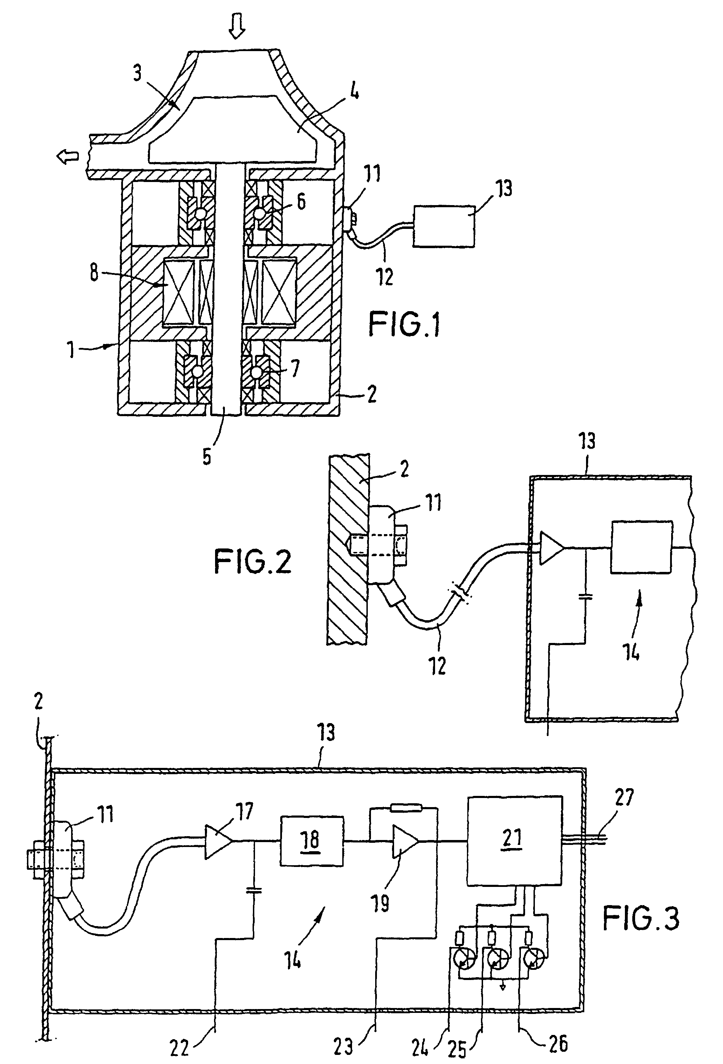

Figur 1 zeigt als Beispiel für eine Vakuumpumpe ein Turboradialgebläse 1 mit seinem Gehäuse 2. Innerhalb des Gehäuses 2 befinden sich der Rotor 3, bestehend aus dem Läufer 4 und der Welle 5. Der Welle 5 sind die Rotorlager 6 und 7 sowie der Antriebsmotor 8 zugeordnet.

Bei den Ausführungsbeispielen nach den Figuren 1 und 2 ist der Sensor 11 unmittelbar am Pumpengehäuse 2 angekoppelt (angeschraubt). Über eine Kabelverbindung 12 ist er mit dem Gehäuse 13 verbunden, in dem sich die elektronische Einheit 14 befindet.

Beim Ausführungsbeispiel nach Figur 3 befindet sich der Sensor 1 ebenfalls im Elektronikgehäuse 13. Gemeinsam mit diesem Gehäuse 13 ist er am Pumpengehäuse 2 - von außen oder von innen - befestigt. Zweckmäßig bestehen Gehäuse 13 und eine gegebenenfalls vorhandene Gehäusedichtung aus einem Hochfrequenzfelder abschirmenden Werkstoff (Metall, vorzugsweise Aluminium).

Entsprechend Figur 3 umfaßt die elektronische Einheit einen Eingangsverstärker 17, einen Gleichrichter 18, einen Verstärker 19 und einen Controller (z.B. Mikroprozessor) 21. Hinter dem Eingangsverstärker 17 kann ein gepuffertes dynamisches Signal (Ausgang 22) abgenommen werden. Am Ausgang des Verstärkers 19 liegt ein Analogsignal vor, das am Ausgang 23 abgenommen werden kann. Weiterhin sind drei vom Controller 21 gesteuerte Schaltausgänge 24, 25, 26 vorhanden, die beim Überschreiten eines vorgegebenen Grenzwertes beispielsweise ein Warnsignal, ein direktes Schaltsignal und ein verzögertes Schaltsignal liefern.

Zur Visualisierung des Schwingungsvorganges sowie zur Einstellung der Schaltschwellen steht eine serielle Verbindung 27, z.B. nach RS232 Standard, mit einem PC zur Verfügung. Die zugehörige Software bringt den Effektivwert des Schwingungssignales sowie die beiden aktuellen Schwellwerte online in einem Oszillogramm zur Anzeige. Zusätzlich werden die entsprechenden digitalen Werte angezeigt sowie im Sensor integrierte Betriebsstunden- und Abschaltungszähler ausgelesen und dargestellt. Ist in der elektronischen Einheit 14 ein nichtflüchtiges Speicherelement vorgesehen, dann kann dieses der Speicherung dieser oder ähnlicher Daten dienen. Sie können in diesem Fall auch nach der Abschaltung von Pumpe und Sensor noch ausgelesen werden.

Die Überwachung der Vakuumpumpe 1 mit Hilfe des beschriebenen Sensors kann folgendermaßen durchgeführt werden:

Bei Überschreitung eines frei einstellbaren Schwellwertes wird ein erster Schaltausgang (24) gesetzt, der nach Unterschreiten der Schwelle wieder zurückgenommen wird. Üblicherweise dient dieser Ausgang zur Ausgabe einer Warnung.

Wird eine zweite, ebenfalls frei wählbare Schwelle innerhalb eines ersten Zeitabschnittes, z.B. 1 Minute, für die Dauer eines zweiten Zeitabschnittes, z.B. für mindestens 30s, überschritten, wird der zugehörige, zweite Schaltausgang (25) gesetzt. Nach einem dritten Zeitabschnitt, z.B. 40 bis 50s später, folgt das Setzen des dritten Schaltausganges (26). Die beiden Ausgänge 25 und 26 können zur Abschaltung und Verriegelung der überwachten Pumpe benutzt werden. Sie werden erst mit einem Versorgungsspannungsreset zurückgenommen.

## Patentansprüche

1. Umwälzgebläse, Vakuumpumpe oder dergleichen mit einem Gehäuse (2), mit einem im Gehäuse angeordneten Rotor (3) und mit Rotorlagern (6, 7), wobei am Gehäuse (2) des Gebläses oder der Pumpe ein Körperschallsensor (11) befestigt ist und zur Verarbeitung und Auswertung der vom Sensor (11) gelieferten Signale eine elektronische Einheit (14) vorgesehen ist, **dadurch gekennzeichnet, daß** Sensor (11) und elektronische Einheit (14) im Frequenzbereich 0,1 bis 100 kHz breitbandig ausgelegt sind und daß die elektronische Einheit (14) mit mehreren Schaltausgängen (24 bis 26) ausgerüstet ist, welche Warnsignale, direkte Schaltsignale oder verzögerte Schaltsignale liefern.

2. Maschine nach Anspruch 1, **dadurch gekennzeichnet, daß** zusätzlich Ausgänge (22, 23) für dynamische und/oder analoge Signale vorgesehen sind.

3. Maschine nach einem der vorhergehenden Ansprüche, **dadurch gekennzeichnet, daß** Bestandteil der elektronischen Einheit (14) ein Betriebsstundenzähler und/oder ein Abschaltungszähler ist.

4. Maschine nach einem der vorhergehenden Ansprüche, **dadurch gekennzeichnet, daß** die elektronische Einheit (14) mit einem nichtflüchtigen Speicherelement ausgerüstet ist.

5. Maschine nach einem der vorhergehenden Ansprüche, **dadurch gekennzeichnet, daß** der Körperschallsensor (11) ein handelsüblicher Sensor ist.

6. Maschine nach einem der vorhergehenden Ansprüche, **dadurch gekennzeichnet, daß** der Sensor (11) mechanisch fest im oder am Gebläse- bzw. Pumpengehäuse (2) angekoppelt ist.

7. Maschine nach einem der vorhergehenden Ansprüche, **dadurch gekennzeichnet, daß** sich Sensor (11) und elektronische Einheit (14) in einem Gehäuse (13) befinden, das am Gebläse- bzw. Pumpengehäuse (2) befestigt ist.

8. Maschine nach Anspruch 7, **dadurch gekennzeichnet, daß** das Sensorgehäuse (13) und eine gegebenenfalls vorhandene Gehäusedichtung aus einem Hochfrequenzfelder abschirmenden Werkstoff (Metall, vorzugsweise Aluminium) besteht.

9. Maschine nach einem der vorhergehenden Ansprüche, **dadurch gekennzeichnet, daß** sie mit Keramiklagern (6,7) ausgerüstet ist.

10. Maschine nach einem der vorhergehenden Ansprüche, **dadurch gekennzeichnet, daß** die elektronische Einheit (14) mit einem Mikroprozessor (21) ausgerüstet ist.

11. Verfahren zum Betrieb eines Umwalzgebläses, einer Vakuumpumpe oder dergleichen nach einem der vorhergehenden Ansprüche, **dadurch gekennzeichnet, daß** bei Überschreitung eines frei einstellbaren Schwellwertes ein Schaltausgang gesetzt wird, der die Abgabe eines Warnsignals auslöst und nach Unterschreiten der Schwelle wieder zurückgenommen wird.

12. Verfahren nach dem vorhergehenden Anspruch **dadurch gekennzeichnet, daß** - wenn eine zweite, frei wählbare Schwelle innerhalb eines bestimmten Zeitabschnittes für einen kleineren, in diesem Zeitabschnitt liegenden zweiten Abschnitt überschritten wird - ein zweiter Schaltausgang gesetzt wird und daß mit Hilfe des zweiten Schaltausganges Abschaltungen, Verriegelungen usw. der überwachten Pumpe durchgeführt werden.

13. Verfahren nach einem der vorhergehenden Ansprüche 11 oder 12, **dadurch gekennzeichnet, daß** - wenn eine zweite, frei wählbare Schwelle innerhalb eines bestimmten Zeitabschnittes für einen kleineren, in diesem Zeitabschnitt liegenden zweiten Abschnitt überschritten wird - ein zweiter Schaltausgang gesetzt wird, daß - wenn nach einem dritten Zeitabschnitt die zweite Schwelle noch nicht unterschritten worden ist - ein dritter Schaltausgang gesetzt wird und daß mit Hilfe des zweiten und des dritten Schaltausganges Abschaltungen, Verriegelungen usw. der überwachten Pumpe durchgeführt werden.

14. Verfahren nach dem vorhergehenden Anspruch, **dadurch gekennzeichnet, daß** - wenn eine zweite, frei wählbare Schwelle innerhalb eines bestimmten Zeitabschnittes für einen kleineren, in diesem Zeitabschnitt liegenden zweiten Abschnitt überschritten wird - ein zweiter Schaltausgang gesetzt wird, daß - wenn nach einem dritten Zeitabschnitt die zweite Schwelle noch nicht unterschritten worden ist - ein dritter Schaltausgang gesetzt wird und daß mit Hilfe des zweiten und des dritten Schaltausganges Abschaltungen, Verriegelungen usw. der überwachten Pumpe durchgeführt werden.

## Claims

1. Circulating blower, vacuum pump or similar, with a casing (2), with a rotor (3), which is disposed in the casing, and with rotor bearings (6, 7), wherein a structure-borne noise sensor (11) is fastened to the casing (2) of the blower or of the pump, and an electronic unit (14) is provided to process and evaluate the signals delivered by the sensor (11), **characterised in that** the sensor (11) and the electronic unit (14) are designed for broad-band operation in the frequency range from 0.1 to 100 kHz, and that the electronic unit (14) is equipped with a plurality of switching outputs (24 to 26) which deliver alarm signals, direct switching signals or delayed switching signals.

2. Machine according to Claim 1, **characterised in that** additional outputs (22, 23) are provided for dynamic and/or analogue signals.

3. Machine according to any one of the preceding Claims, **characterised in that** an elapsed-hour meter and/or a disconnection meter is/are (a) component(s) of the electronic unit (14).

4. Machine according to any one of the preceding Claims, **characterised in that** the electronic unit (14) is equipped with a non-volatile memory element.

5. Machine according to any one of the preceding Claims, **characterised in that** the structure-borne noise sensor (11) is a commercially available sensor.

6. Machine according to any one of the preceding Claims, **characterised in that** the sensor (11) is coupled in a mechanically fixed manner in or to the blower or pump casing (2).

7. Machine according to any one of the preceding Claims, **characterised in that** the sensor (11) and the electronic unit (14) are located in a casing (13) which is fastened to the blower or pump casing (2).

8. Machine according to Claim 7, **characterised in that** the sensor casing (13) and a casing seal, which is optionally provided, consist of a material (metal, preferably aluminium) which shields against high-frequency fields.

9. Machine according to any one of the preceding Claims, **characterised in that** it is equipped with ceramic bearings (6, 7).

10. Machine according to any one of the preceding Claims, **characterised in that** the electronic unit (14) is equipped with a microprocessor (21).

11. Method for operating a circulating blower, a vacuum pump or similar according to any one of the preceding Claims, **characterised in that** a switching output is set when a freely adjustable threshold value is exceeded, which output triggers the delivery of an alarm signal and is reset after the value falls below the threshold.

12. Method according to any one of the preceding Claims, **characterised in that** - if a second, freely selectable threshold is exceeded within a certain time segment for a shorter, second segment lying in this time segment - a second switching output is set, and that the monitored pump is disconnected, locked out, etc. by means of the second switching output.

13. Method according to either of the preceding Claims 11 and 12, **characterised in that** - if a second, freely selectable threshold is exceeded within a certain time segment for a shorter, second segment lying in this time segment - a second switching output is set, that - if the value has not fallen below the second threshold after a third time segment - a third switching output is set, and that the monitored pump is disconnected, locked out, etc. by means of the second and the third switching output.

14. Method according to the preceding Claim,
**characterised in that** - if a second, freely selectable threshold is exceeded within a certain time segment for a shorter, second segment lying in this time segment - a second switching output is set, that - if the value has not fallen below the second threshold after a third time segment - a third switching output is set, and that the monitored pump is disconnected, locked out, etc. by means of the second and the third switching output.

## Revendications

1. Soufflante de circulation, pompe à vide ou similaire avec un carter (2), avec un rotor (3) monté dans le carter et avec les paliers du rotor (6, 7), un capteur de vibrations dans les solides (11) étant fixé sur le carter (2) de la soufflante ou de la pompe et avec une unité électronique (14) pour l'exploitation et l'analyse des signaux reçus du capteur (11), **caractérisée en ce que** le capteur (11) et l'unité électronique (14) sont réglés sur une large bande de fréquences, de 0,1 à 100 kHz et que l'unité électronique (14) comprend plusieurs sorties-coupures (24 à 26) pour envoyer des signaux d'alerte, des signaux de coupure directs ou des signaux de coupure temporisés.

2. Machine selon la revendication 1, **caractérisée en ce que** des sorties supplémentaires (22, 23) sont prévues pour des signaux dynamiques et/ou analogiques.

3. Machine selon l'une des revendications précédentes, **caractérisée en ce que** le composant de l'unité électronique (14) est un compteur d'heures de service et/ou un compteur de temps de coupure.

4. Machine selon l'une des revendications précédentes, **caractérisée en ce que** l'unité électronique (14) est équipée d'un élément de mémoire permanente.

5. Machine selon l'une des revendications précédentes, **caractérisée en ce que** le capteur de vibration (11) est un capteur du commerce.

6. Machine selon l'une des revendications précédentes, **caractérisée en ce que** le capteur (11) est fixé mécaniquement d'une façon rigide dans ou sur le carter de la soufflante ou sur la soufflante et/ou de la pompe.

7. Machine selon l'une des revendications précédentes **caractérisée en ce que** le capteur (11) et l'unité électronique (14) sont placés dans un carter (13) fixé sur le carter (2) de la soufflante et/ou de la pompe.

8. Machine selon la revendication 7, **caractérisée en ce que** le carter (13) du capteur ainsi qu'un joint, s'il en existe un, sont réalisés en un matériau formant écran contre les champs à hautes fréquences (métal, de préférence aluminium).

9. Machine selon l'une des revendications précédentes, **caractérisée en ce que** ses paliers (6, 7) sont en céramique.

10. Machine selon l'une des revendications précédentes, **caractérisée en ce que** l'unité électronique (14) est équipée d'un microprocesseur (21).

11. Procédé pour exploiter une soufflante de circulation, une pompe à vide ou similaires (2) selon l'une des revendications précédentes, **caractérisé en ce que**, en cas de dépassement d'un seuil réglable à volonté, une sortie-coupure s'établit, émettant un signal d'alerte, qui sera interrompu dès que le seuil sera franchi en sens inverse.

12. Procédé selon l'une des revendications précédentes, **caractérisé en ce que**, si un deuxième seuil, librement choisi est franchi dans un intervalle de temps donné, compris dans le premier intervalle, mais inférieur à celui-ci, une deuxième sortie-coupure s'établira, et que, en corrélation avec la deuxième sortie-coupure, les arrêts, les verrouillages etc. de la pompe surveilée seront effectués.

13. Procédé selon l'une des revendications précédentes 11 ou 12, **caractérisé en ce que**, si un deuxième seuil, librement choisi, est franchi dans un intervalle de temps donné, compris dans le premier intervalle, mais inférieur à celui-ci, une deuxième sortie-coupure s'établira, de façon à ce que, si après un troisième intervalle de temps, on n'est pas encore revenu au dessous du deuxième seuil, une troisième sortie-coupure s'établira, et que, en corrélation avec les deuxième et troisième sorties-coupure, les arrêts, les verrouillages etc. de la pompe surveillée seront effectués.

14. Procédé selon la revendication précédente, **caractérisé en ce que**, si un deuxième seuil, librement choisi, est franchi dans un intervalle de temps donné, compris dans le premier intervalle, mais inférieur à celui-ci, une deuxième sortie-coupure s'établira, de façon à ce que, si après un troisième intervalle de temps, on n'est pas encore revenu au dessous du deuxième seuil, une troisième sortie-coupure s'établira, et que, en corrélation avec les deuxième et troisième sorties-coupure, les arrêts, les verrouillages etc. de la pompe surveillée seront effectués.
